# EUROPEAN PATENT APPLICATION

(11) **EP 4 596 586 A1**
(43) Date of publication of application: **06.08.2025**
(21) Application number: 23872298.7
(22) Date of filing: 26.09.2023
(51) Int. Cl.: C08B 11/12, C08L 1/04, D21H 11/20

(54) **CELLULOSE NANOFIBER, AND AQUEOUS DISPERSION COMPOSITION CONTAINING SAME**

(30) Priority: 27.09.2022 JP 2022153302
(71) Applicant: Nippon Paper Industries Co., Ltd., Tokyo 114-0002 (JP)
(72) Inventor: MATSUMOTO, Makoto, Tokyo 114-0002 (JP); YAMASAKI, Shunsuke, Tokyo 114-0002 (JP); YASUI, Hiroaki, Tokyo 114-0002 (JP)
(74) Representative: Müller-Boré & Partner Patentanwälte PartG mbB
(86) International application number: PCT/JP2023/034827
(87) International publication number: WO 2024/071075

(57) **Abstract**

The present invention has an object of providing a cellulose nanofiber capable of suppressing the emergence of a viscous consistency and exhibiting excellent physical properties in applications for foaming membranes such as membranes of paints, films, and the like. The present invention provides a cellulose nanofiber that has (A) a carboxyl group of which an amount relative to a bone dry mass of the cellulose nanofiber is in a range of 0.8 to 1.10 mmol/g, and (B) an aspect ratio of 20 or more and less than 50. The present invention also provides an aqueous dispersion composition containing the same.

## Description

### Field

The present invention relates to a cellulose nanofiber and an aqueous dispersion composition containing the same.

### Background

In general, natural or synthetic fibers with diameters of about 1 to 100 nm are occasionally referred to as nanofibers. Cellulose nanofibers, which are a type of nanofiber, are expected to be developed in various applications such as foods, cosmetics, paints, reinforcing materials for composite materials, and the like.

As a method for obtaining cellulose nanofibers, there is known a method in which cellulose fibers are oxidized in water in the presence of an N-oxyl compound or the like, impurities are removed, and a dispersing force is applied thereto (patent literature 1).

### Citation List

### Patent Literature

patent literature 1: Japanese Patent Application Laid-Open No. 2008-001728 A

### Summary

### Technical Problem

On the other hand, in developing cellulose nanofibers for various applications, the development of cellulose nanofibers having various characteristics is desired. For example, one such nanofiber is a cellulose nanofiber having a small aspect ratio, which is calculated from the average fiber length and the average fiber diameter. With a small aspect ratio, a cellulose nanofiber with a short fiber length relative to the fiber diameter can be obtained. Thus, such a cellulose nanofiber is conceivably used in applications such as forming a film on a substrate by applying a cellulose nanofiber dispersion onto the substrate or mixing a cellulose nanofiber dispersion with a paint that contains a pigment, a binder, and the like.

Problems when a cellulose nanofiber dispersion is applied onto a substrate to form a film on the substrate include the following. First, if the viscosity of the dispersion is too high, it is difficult to uniformly apply the dispersion onto the substrate. On the other hand, when the cellulose nanofiber dispersion is diluted to be used for uniform application, the application and drying must be performed repeatedly until the desired film thickness is achieved, and thus the work efficiency is poor. In addition, when the cellulose nanofiber dispersion is mixed with a paint containing a pigment and a binder, if the viscosity of the dispersion is too high, the dispersion cannot be evenly mixed in the paint.

In view of the above-mentioned circumstances, it is an object of the present invention to provide a cellulose nanofiber capable of suppressing the emergence of a viscous consistency and exhibiting excellent physical properties in applications for forming membranes of paints, films, and the like.

### Solution to Problem

That is, the present invention is as the following <1> to <4>.
<1> A cellulose nanofiber satisfying the following conditions (A) to (B):
   (A) the cellulose nanofiber has a carboxyl group and a carboxyl group amount relative to a bone dry mass of the cellulose nanofiber is 0.8 to 1.10 mmol/g; and
   (B) an aspect ratio thereof is 20 or more and less than 50.
<2> The cellulose nanofiber according to <1>, further satisfying the following condition (C),
   (C) an average fiber diameter is 500 nm or less.
<3> An aqueous dispersion composition comprising the cellulose nanofiber according to <1> or <2>.
<4> The composition according to <3>, for use in a film.

### Advantageous Effects of Invention

In the present invention, it is possible to provide a cellulose nanofiber capable of suppressing the emergence of a viscous consistency and exhibiting excellent physical properties such as application character, transparency, and wettability in applications for forming membranes of paints, films, and the like.

### Description of Embodiments

### <1. Cellulose nanofiber>

In the present specification, a cellulose nanofiber may also be referred to as cellulose nanofibrils, fibrillated cellulose, or nanocellulose crystals.

The cellulose nanofiber of the present invention (hereinafter, sometimes referred to as CNF) has (A) a carboxyl group and a carboxyl group amount relative to a bone dry mass of the cellulose nanofiber of 0.80 to 1.10 mmol/g, and (B) an aspect ratio of 20 or more and less than 50.

### (Carboxyl group amount (Condition (A)))

The cellulose nanofiber is a cellulose nanofiber that contains a carboxyl group, and is a so-called oxidized cellulose nanofiber (hereinafter, sometimes referred to as oxidized CNF). The amount of the carboxyl group is 0.80 or more, preferably 0.85 or more, and more preferably 0.90 or more, relative to the bone dry mass of the oxidized cellulose. Thus, the energy required for defibration can be kept low, and a transparent film can be formed when the substrate is coated therewith. The upper limit is 1.10 or less. Thus, it is possible to suppress adverse effects on the physical properties of materials for forming a membrane such as a film. Thus, the amount of the carboxyl group of the oxidized cellulose is 0.80 to 1.10 mmol/g, more preferably 0.85 to 1.10 mmol/g, and even more preferably about 0.90 to 1.10 mmol/g. In the present specification, when the degree of modification is indicated, the amount of the carboxyl group indicates the total amount of the amount of the carboxyl group (-COOH) and the amount of the carboxylate group (-COO⁻). The amount of the carboxyl group in the oxidized cellulose nanofiber is an index indicating the degree of modification of the oxidized cellulose. The amount of the carboxyl group can be adjusted by reaction conditions such as the amount of oxidizing agent added and the reaction time in the production thereof, which will be described later.

The amount of the carboxyl group may be measured using oxidized pulp (oxidized cellulose), before defibration, under the following conditions. Specifically, 60 ml of a 0.5-mass% slurry of the oxidized pulp is prepared. After adding a 0.1M aqueous hydrochloric acid solution to adjust the pH to 2.5, the electric conductivity is measured while a 0.05N aqueous sodium hydroxide solution is added dropwise until the pH reaches 11. The amount of the carboxyl group can be calculated using the following equation, based on the amount (a) of sodium hydroxide consumed during the weak acidic neutralization step where the change in electric conductivity is moderate: Amount of carboxyl group [mmol/g pulp] = a [ml] × 0.05/ mass of oxidized pulp [g].

As a general rule, the degree of modification does not change in the defibration treatment for preparing a cellulose nanofiber, and thus the degree of modification of the oxidized cellulose (undefibrated) can be regarded as the degree of modification of the defibrated cellulose nanofiber.

### (Average fiber diameter (Condition (C)))

The average fiber diameter of the cellulose nanofiber of the present invention is preferably 500 nm or less, and more preferably 50 nm or less. The lower limit is not particularly limited, and is, for example, 3 nm or more. Therefore, the average fiber diameter is preferably 3 nm or more and 500 nm or less, more preferably 3 nm or more and 50 nm or less, and even more preferably 3 nm or more and 20 nm or less. The average fiber diameter and the average fiber length may be calculated as the number-average fiber diameter or fiber length by, for example, preparing a 0.001 mass% aqueous dispersion of cellulose nanofibers, thinly spreading the diluted dispersion over a mica sample table, heating and drying it at 50°C to prepare a sample for observation, and measuring a cross-sectional height of the profile image observed by an atomic force microscopy (AFM).

### (Aspect ratio (Condition (B)))

The aspect ratio of the oxidized CNF is 20 or more, preferably 25 or more, and more preferably 30 or more. With such an aspect ratio, it is possible to suppress a decrease in viscosity, to suppress occurrence of cissing during application onto a substrate, and to form a uniform film. The upper limit is less than 50, and preferably 45 or less. With such an upper limit, the handling property at the time of coating is improved, and a uniform film can be formed. In addition, bubble removal during coating can be easily performed. Accordingly, the aspect ratio is in the range of 20 or more and less than 50, preferably 25 to 45, and more preferably 30 to 45. When the aspect ratio falls within this range, the viscosity properties can be adjusted to an appropriate range.

The aspect ratio may be calculated by the following formula: Aspect ratio = average fiber length / average fiber diameter

### <2. Method for producing cellulose nanofiber>

The cellulose nanofiber of the present invention can be obtained by defibrating oxidized cellulose that has been obtained by introducing a carboxyl group into a cellulose raw material.

### (Cellulose raw material)

Examples of the cellulosic raw materials may include materials derived from plant materials (for example, wood, bamboo, hemp, jute, kenaf, wastes in farm land, cloth, pulp (needle-leaved tree unbleached kraft pulp (NUKP), needle-leaved tree bleached kraft pulp (NBKP), broad-leaved tree unbleached kraft pulp (LUKP), broad-leaved tree bleached kraft pulp (LBKP), needle-leaved tree unbleached sulfite pulp (NUSP), needle-leaved tree bleached sulfite pulp (NBSP), thermomechanical pulp (TMP), recycled pulp, waste paper, etc.), animal materials (e.g., *ascidiacea*), *algae*, microorganisms (e.g., acetobacter), and microorganism products. Any materials given herein may be used. Among these, cellulose raw materials derived from plants or microorganisms are preferred, and cellulose raw materials derived from plants are more preferred.

### (Introduction of carboxyl group (oxidation))

The carboxyl group can be introduced into the cellulose raw material by oxidizing (carboxylating) the above-mentioned cellulose raw material by a known method.

### - TEMPO oxidation -

One example of oxidation is a method of oxidizing the cellulose raw material in water using an oxidizing agent in the presence of an N-oxyl compound and a bromide, an iodide, or a mixture thereof. A primary hydroxyl group at a C6 position of the pyranose ring on the surface of the cellulose is selectively oxidized by this oxidation reaction. As a result, an oxidized cellulose having an aldehyde group and a carboxyl group (-COOH) or a carboxylate group (-COO⁻) on the surface thereof can be obtained. The concentration of cellulose in the reaction system is not particularly limited, and is preferably 5% by mass or less.

An N-oxyl compound refers to a compound capable of generating a nitroxy radical. As the N-oxyl compound, any compound may be used as long as it is a compound that promotes the desired oxidation reaction. Examples thereof may include 2,2,6,6-tetramethylpiperidine-1-oxy radical (TEMPO) and derivatives thereof (e.g., 4-hydroxy TEMPO).

The amount of the N-oxyl compound to be used is not particularly limited as long as it is a catalytic amount capable of oxidizing cellulose that serves as a raw material. The usage amount of the N-oxyl compound is preferably 0.01 mmol to 10 mmol, more preferably 0.01 mmol to 1 mmol, and even more preferably 0.02 mmol to 0.5 mmol or 0.05 mmol to 0.5 mmol, relative to 1 g of the bone dry cellulose. In addition, the concentration thereof is preferably 0.1 mmol/L to 4 mmol/L relative to the reaction system.

A bromide is a compound containing bromine, and includes an alkali metal bromide that can be dissociated in water to be ionized. An iodide is a compound containing iodine, and includes an alkali metal iodide.

The usage amount of the bromide or the iodide may be selected within a range in which the agent can promote the oxidation reaction. The total amount of the bromide and the iodide is preferably 0.1 mmol to 100 mmol, more preferably 0.1 mmol to 10 mmol, and even more preferably 0.5 mmol to 5 mmol, relative to 1 g of the bone dry cellulose.

As the oxidizing agent, any known oxidizing agents can be used, and examples thereof may include halogen, hypohalous acid, halous acid, perhalic acid and salt of these acids, halogen oxide, and peroxide. Among these, sodium hypochlorite which is inexpensive and has a low environmental impact is preferred.

The usage amount of the oxidizing agent is preferably 0.5 mmol to 500 mmol, more preferably 0.5 mmol to 50 mmol, and even more preferably 1 mmol to 25 mmol, relative to 1 g of the bone dry cellulose. Furthermore, for example, the usage amount of the oxidizing agent is preferably 1 mol to 40 mol, relative to 1 mol of the N-oxyl compound.

In the step of oxidizing cellulose, the reaction can proceed efficiently even under relatively mild conditions. Thus, the reaction temperature is preferably 4°C to 40°C and may be a room temperature of about 15°C to 30°C. As the reaction proceeds, carboxylic groups are generated in the cellulose. Thus, the pH of the reaction solution decreases. In order to allow the oxidation reaction to proceed efficiently, it is preferable to add an alkaline solution such as an aqueous sodium hydroxide solution during the reaction to maintain the pH of the reaction solution at about 8 to 12, preferably at about 9 to 12, and more preferably at 10 to 12. The reaction medium is preferably water because of ease of handling and unlikeliness in causing side reactions.

The reaction time in the oxidation reaction may be appropriately set according to the degree of the progress in oxidation, and is usually 0.5 hour to 6 hours.

The oxidation reaction may be performed in two separate stages. For example, the carboxylated cellulose obtained through filtration after the completion of the reaction in the first stage may be oxidized again by the same or different reaction conditions to perform efficient oxidation that is not hindered by the salt that is produced as a by-product during the reaction in the first stage.

### - Ozone oxidation -

Another example of oxidation is oxidation by bringing the cellulose raw material into contact with an ozone-containing gas. This oxidation reaction oxidizes the hydroxyl groups at least at 2- and 6-positions of the pyranose ring and causes decomposition of the cellulose chain.

The ozone concentration in the ozone-containing gas is preferably 50 g/m³ to 250 g/m³, and more preferably 50 g/m³ to 220 g/m³. The amount of ozone added relative to the cellulose raw material is preferably 0.1 part by mass to 30 parts by mass, and more preferably 5 parts by mass to 30 parts by mass, relative to 100 parts by mass of the solid content of the cellulose raw material.

The ozone treatment temperature is preferably 0°C to 50°C, and more preferably 20°C to 50°C. The ozone treatment time is not particularly limited, and is about 1 minute to 360 minutes, and preferably about 30 minutes to 360 minutes. When the conditions of the ozone treatment fall within these ranges, the cellulose can be prevented from being excessively oxidized and decomposed, and the yield of the oxidized cellulose is improved.

An additional oxidation treatment may be performed using an oxidizing agent after performing the ozone treatment. The oxidizing agent that is to be used in the additional oxidation treatment is not particularly limited, and examples thereof may include a chlorine compound such as chlorine dioxide and sodium chlorite, oxygen, hydrogen peroxide, persulfuric acid, and peracetic acid. For example, the additional oxidation treatment may be performed by dissolving these oxidizing agents in water or a polar organic solvent, such as alcohol, to prepare an oxidizing agent solution, and immersing the cellulose raw material in the solution.

### (Shortening-fibrillation treatment)

It is preferable to perform a shortening-fibrillation treatment before defibration after oxidation. By performing the shortening-fibrillation treatment, the size of the cellulose nanofiber such as the aspect ratio, the average fiber diameter, and the like can be adjusted, and an increase in the viscosity of the dispersion composition containing the cellulose nanofibers can be suppressed.

Examples of the shortening-fibrillation treatment may include a treatment of hydrolyzing the oxidized cellulose under alkaline or acidic conditions (preferably under alkaline conditions). The pH in the reaction system is preferably 8 or higher, more preferably 9 or higher, and even more preferably 10 or higher. With such a pH, it is possible to appropriately progress the shortening fibrillation by hydrolysis. The upper limit is preferably 14 or lower, more preferably 13 or lower, and even more preferably 12 or lower. With such an upper limit, coloration after hydrolysis can be suppressed, and a transparent oxidized cellulose can be obtained. Accordingly, the pH is preferably 8 to 14, more preferably 9 to 13, and even more preferably 10 to 12. The alkali used for adjustment of the pH value may be any substance as long as it is water-soluble, and sodium hydroxide is preferable from the viewpoint of production cost.

In the shortening-fibrillation treatment, an auxiliary agent such as an oxidizing agent or a reducing agent is preferably used. As a result, it is possible to suppress double bond formation caused by β-elimination in hydrolysis (particularly, hydrolysis under alkaline conditions) and to also suppress the oxidized cellulose coloration that is caused by double bond formation. Examples of the oxidizing agent may include one or a combination of two or more types selected from oxygen, ozone, hydrogen peroxide, and hypochlorite. From the viewpoint of being unlikely to generate radicals, oxygen, hydrogen peroxide, and hypochlorite are preferable, and hydrogen peroxide is more preferable. Examples of the reducing agent may include one or a combination of two or more types selected from sodium borohydride, hydrosulfite, and salts of sulfurous acid. From the viewpoint of reaction efficiency, the usage amount of the auxiliary agent is preferably 0.1 to 10% by mass, more preferably 0.3 to 5% by mass, and even more preferably 0.5 to 3% by mass, relative to the bone dry cellulose.

The reaction temperature of the shortening-fibrillation treatment is preferably 40°C or higher, more preferably 50°C or higher, and even more preferably 60°C or higher. At this temperature, the hydrolysis can appropriately proceed, and the shortening fibrillation can be sufficiently achieved. The upper limit is preferably 120°C or lower, more preferably 100°C or lower, and even more preferably 90°C or lower. By satisfying such a condition, coloration of the oxidized cellulose after hydrolysis can be suppressed. Therefore, from the viewpoint of reaction efficiency, the temperature is preferably 40 to 120°C, more preferably 50 to 100°C, and even more preferably 60 to 90°C. The reaction time of the hydrolysis is preferably 0.5 hour to 24 hours, more preferably 1 hour to 10 hours, and even more preferably 2 hours to 6 hours. The shortening-fibrillation treatment can be performed, for example, by adding the oxidized cellulose to an alkaline solution (preferably, an alkaline aqueous solution). The concentration of the oxidized cellulose in the alkaline solution is preferably 1 to 20% by mass, more preferably 3 to 15% by mass, and even more preferably 4 to 10% by mass.

### (Defibration)

The device used for defibration is not particularly limited, and examples thereof may include a high-speed rotation type device, a colloid mill type device, a high-pressure type device, a roll mill type device, and an ultrasonic type device. Among these, a high-pressure or ultra-high-pressure homogenizer is preferable, and a high-pressure or ultra-high-pressure homogenizer that is a humidified type is more preferred. Preferably, the device is capable of applying a strong shear force to the cellulose raw materials or the oxidized cellulose (usually to its dispersion). The pressure the device can apply is preferably 50 MPa or higher, more preferably 100 MPa or higher, and even more preferably 140 MPa or higher. The device is preferably a high-pressure or ultra-high-pressure homogenizer that is a humidified type and is capable of applying the above-mentioned pressure to cellulose raw materials or oxidized cellulose (usually to its dispersion) and capable of applying a strong shear force thereto.

Thus, defibration can be efficiently performed. The number of times of processing (passes) in the defibration device may be one or two or more times, preferably two or more times.

### <3. Dispersion composition>

The above-described cellulose nanofiber can be used as a dispersion composition. The dispersion composition is a composition that includes at least a cellulose nanofiber and a solvent and in which the cellulose nanofiber is dispersed in a dispersion medium.

The dispersion composition can be produced by a dispersion treatment. In the dispersion treatment, usually, a component containing at least oxidized cellulose is dispersed in a solvent. The solvent is not particularly limited as long as the oxidized cellulose can be dispersed therein, and examples thereof may include water, an organic solvent (for example, a hydrophilic organic solvent such as methanol), and a solvent that is a mixture thereof. Since the cellulose raw material is hydrophilic, the solvent is preferably water. In the present specification, a dispersion composition containing water as a solvent is referred to as an aqueous dispersion composition.

The solid concentration of the oxidized cellulose in the dispersion is usually 0.1% by mass or more, preferably 0.2% by mass or more, and more preferably 0.3% by mass or more. With such a solid concentration, the amount of the liquid relative to the amount of the cellulose fiber raw material becomes an appropriate amount, which is efficient. The upper limit is usually 10% by mass or less, preferably 6% by mass or less. With such an upper limit, fluidity can be maintained.

The order of the defibration treatment in the production of the cellulose nanofiber and the dispersion treatment in the preparation of the dispersion composition is not particularly limited, and either one of them may be performed first or both of them may be performed simultaneously. The defibration treatment is preferably performed after the dispersion treatment. The combination of the respective treatments may be performed at least once or may be repeated two or more times. Furthermore, after the dispersion treatment and the defibration treatment, the concentration of solids in the dispersion composition may be adjusted.

Prior to the defibration treatment or the dispersion treatment, a preliminary treatment may be performed as necessary. The preliminary treatment may be performed using a mixing, stirring, emulsifying, or dispersing device such as a high-speed shear mixer.

The dispersion composition may contain other components as necessary. Other components include known optional components such as a preservative.

### <3. Applications of cellulose nanofiber and aqueous dispersion composition>

The above-described cellulose nanofiber and aqueous dispersion composition can be used in various industrial fields such as foods and cosmetics. Examples of applications may include a reinforcing material for resins, rubbers, and the like, and a membrane-forming application. Among these, an application for forming a membrane such as a film is suitable. The material of the substrate is not particularly limited, and examples thereof may include various resins (for example, polyethylene terephthalate, polypropylene, and polyethylene), and metals (for example, aluminum).

### <Examples>

Hereinafter, the present invention will be described in more detail with reference to production examples, examples, and comparative examples. Note that these production examples, examples, and comparative examples are merely demonstrative and are not intended to limit the scope of the present invention. In the production examples, examples, and comparative examples, "part" and "%" are on the basis of mass unless otherwise specified.

### (Example 1)

Five grams (bone dry) of a bleached needle-leaved tree-derived dissolving kraft pulp (DKP manufactured by Buckeye Technologies Inc.) was added to 500 ml of an aqueous solution in which 19.5 mg of TEMPO (Sigma-Aldrich Co. LLC) (0.025 mmol per 1 g of bone dry cellulose) and 514 mg of sodium bromide (1.0 mmol per 1 g of bone dry cellulose) had been dissolved, and the mixture was stirred until the pulp was evenly dispersed therein. To the reaction system, 8 ml of a 2M sodium hypochlorite aqueous solution was added, and then the pH was adjusted to 10.3 with a 0.5N hydrochloric acid aqueous solution, to start an oxidation reaction. During the reaction, the pH in the system decreased, but a 3.0N sodium hydroxide aqueous solution was added successively to adjust the pH to 10.

The reaction continued for 2 hours, and then the mixture was filtered by a glass filter and washed thoroughly with water to obtain carboxylated cellulose. The carboxyl group amount of the obtained carboxylated cellulose was 0.94 mmol/g. Hydrogen peroxide was then added to a 5% (w/v) slurry of oxidized cellulose in an amount of 2% (w/v) relative to the oxidized cellulose, and the pH was adjusted to 12 by using 1M sodium hydroxide. The slurry was hydrolyzed at 80°C for 2 hours. This resultant was adjusted with water to 4.0% (w/v) and treated 5 times with an ultra-high pressure homogenizer (20°C, 140 MPa) to obtain an aqueous dispersion containing a cellulose nanofiber A. The carboxyl group amount of the cellulose nanofiber A was 0.94 mmol/g, the average fiber diameter was 6.9 nm, the average fiber length was 235 nm, and the aspect ratio was 34.

### (Example 2)

An aqueous dispersion containing a cellulose nanofiber B was obtained by the same manner as that of Example 1, except that the amount of the 2M sodium hypochlorite aqueous solution added to the reaction system was changed to 7.5 ml and the hydrolyzed oxidized cellulose fiber was treated 10 times with the ultra-high pressure homogenizer (20°C, 140 MPa). The carboxyl group amount of the cellulose nanofiber B was 0.87 mmol/g, the average fiber diameter was 7.3 nm, the average fiber length was 208 nm, and the aspect ratio was 28.

### (Example 3)

An aqueous dispersion containing a cellulose nanofiber C was obtained by the same manner as that of Example 1, except that the amount of the 2M sodium hypochlorite aqueous solution added to the reaction system was changed to 8.5 ml. The carboxyl group amount of the cellulose nanofiber C was 1.06 mmol/g, the average fiber diameter was 7.2 nm, the average fiber length was 352 nm, and the aspect ratio was 49.

### (Comparative Example 1)

An aqueous dispersion containing a cellulose nanofiber D was obtained by the same manner as that of Example 1, except that the amount of the 2M sodium hypochlorite aqueous solution added to the reaction system was changed to 14 ml. The carboxyl group amount of the cellulose nanofiber D was 1.87 mmol/g, the average fiber diameter was 5.7 nm, the average fiber length was 230 nm, and the aspect ratio was 40.

### (Comparative Example 2)

Five grams (bone dry) of a bleached needle-leaved tree-derived kraft pulp (85% whiteness) was added to 500 mL of an aqueous solution in which 19.5 mg of TEMPO (Sigma-Aldrich Co. LLC) (0.025 mmol per 1 g of bone dry cellulose) and 514 mg of sodium bromide (1.0 mmol per 1 g of bone dry cellulose) had been dissolved, and the mixture was stirred until the pulp was evenly dispersed therein. To the reaction system, 11 ml of a 2M sodium hypochlorite aqueous solution was added, and then the pH was adjusted to 10.3 with a 0.5N hydrochloric acid aqueous solution, to start the oxidation reaction. The pH was adjusted to 10 by successively adding a 0.5N sodium hydroxide aqueous solution. The reaction continued for 2 hours, and then the mixture was filtered by a glass filter and washed thoroughly with water to obtain oxidized cellulose. The carboxyl group amount of the obtained oxidized cellulose was 1.6 mmol/g. This resultant was adjusted with water to 1.0% (w/v) and treated 3 times with an ultra-high pressure homogenizer (20°C, 140 MPa) to obtain an aqueous dispersion containing a cellulose nanofiber E. The carboxyl group amount of the cellulose nanofiber E was 1.6 mmol/g, the average fiber diameter was 3.0 nm, the average fiber length was 753 nm, and the aspect ratio was 251.

### (Comparative Example 3)

An aqueous dispersion containing a cellulose nanofiber F was obtained by the same manner as that of Example 1, except that the amount of hydrogen peroxide added to the 5% (W/V) slurry of the oxidized cellulose was changed to 10% (W/V) relative to the oxidized cellulose. The carboxyl group amount of the cellulose nanofiber F was 0.92 mmol/g, the average fiber diameter was 6.5 nm, the average fiber length was 126 nm, and the aspect ratio was 19.

### (Comparative Example 4)

An aqueous dispersion containing a cellulose nanofiber G was obtained by the same manner as that of Example 1, except that the amount of hydrogen peroxide added to the 5% (W/V) slurry of the oxidized cellulose was changed to 0.5% (W/V) relative to the oxidized cellulose, and the hydrolyzed oxidized cellulose fiber was treated 4 times with the ultra-high pressure homogenizer (20°C, 140 MPa). The carboxyl group amount of the cellulose nanofiber G was 0.95 mmol/g, the average fiber diameter was 7.2 nm, the average fiber length was 370 nm, and the aspect ratio was 51.

### (Comparative Example 5)

An aqueous dispersion containing a cellulose nanofiber H was obtained by the same manner as that of Example 1, except that the amount of the 2M sodium hypochlorite aqueous solution added to the reaction system was changed to 6.5 ml. The carboxyl group amount of the cellulose nanofiber H was 0.71 mmol/g, the average fiber diameter was 8.2 nm, the average fiber length was 268 nm, and the aspect ratio was 33.

### (Comparative Example 6)

An aqueous dispersion containing a cellulose nanofiber I was obtained by the same manner as that of Example 1, except that the amount of the 2M sodium hypochlorite aqueous solution added to the reaction system was changed to 10 ml. The carboxyl group amount of the cellulose nanofiber I was 1.18 mmol/g, the average fiber diameter was 5.3 nm, the average fiber length was 241 nm, and the aspect ratio was 45.

### (Evaluation)

The concentration of the aqueous dispersion, containing each of the cellulose nanofibers A to G obtained in the respective examples, was adjusted to 3%. On the other hand, a PET film as a substrate was placed on a horizontal base, and the above-described 3% aqueous dispersion was applied onto the surface of the PET film using a coating bar to form a film with a dispersion weight of 780 g/m². The coating bar used was prepared by winding tape around both ends of a glass rod and adjusting the height to 0.7 mm. The film was dried at 35°C for 1 day to form a coating film, and the following evaluation was performed.

### - Application Character -

The handling property and the surface condition of the coating film when the dispersion was applied using the coating bar were visually evaluated. The evaluation criteria were as follows: when the surface of the coating film after coating was uniform, application character was evaluated as good; when unevenness or non-uniformity was confirmed, application character was evaluated as poor; and when the coating film was not formed and cissing occurred, application character was evaluated as poor. When the aspect ratio is large, there is a concern that the viscosity becomes high and the handling property deteriorates, and there is also a concern that bubbles enter into the coating film and result in a non-uniform coating film surface. When the aspect ratio is small, a coating film may not be formed, or cissing may occur.

### - Wettability -

Five microliters of water was dropped onto the surface of the coating film, and the contact angle of the water after 1 second was measured using a contact angle measuring instrument (trade name: DAT1122, manufacturer: Fibro) at a temperature of 23°C and a humidity (relative humidity) of 50%. Wettability was evaluated as good when the contact angle was 28° or less, slightly poor when the contact angle was less than 30°, and poor when the contact angle was 30° or more.

### - Transparency -

A UV-VIS spectrophotometer UV-1800 (manufactured by Shimadzu Corporation) was used to measure the transmittance of light at a wavelength of 660 nm using a square cell with an optical path length of 10 mm (blank: PET film). The transparency was determined as good when the light transmittance was 96% or more, slightly poor when the light transmittance was 90% or more, and poor when the light transmittance was less than 90%.

### [Table 1]

**Table 1**

| | Example | | | Comparative Example | | | | | |
|---|---|---|---|---|---|---|---|---|---|
| | 1 | 2 | 3 | 1 | 2 | 3 | 4 | 5 | 6 |
| CNF Sample | A | B | C | D | E | F | G | H | I |
| (mmol/g) | 0.94 | 0.87 | 1.06 | 1.87 | 1.60 | 0.92 | 0.95 | 0.71 | 1.18 |
| Average Fiber Diameter (nm) | 6.9 | 7.3 | 7.2 | 5.7 | 3.0 | 6.5 | 7.2 | 8.2 | 5.3 |
| Average Fiber Length (nm) | 235 | 208 | 352 | 230 | 753 | 126 | 370 | 268 | 241 |
| Aspect Ratio | 34 | 36 | 49 | 40 | 251 | 19 | 51 | 33 | 45 |
| Application Character | Good | Good | Good | Good | Poor | Poor | Poor | Good | Good |
| Transparency | Good | Good | Good | Good | Unevaluated due to Inability to Form Film | | | Poor | Good |
| Wettability | Good | Good | Good | Poor | | | | Unevaluated | Slightly Poor |

The cellulose nanofiber of the present invention is suitable for various applications such as foods, cosmetics, film-forming materials, and reinforcing materials of composite materials because the aspect ratio and the carboxyl group amount thereof are adjusted to respective appropriate ranges. In particular, the cellulose nanofiber can exhibit good physical properties in applications for forming membranes such as films and membranes of paints, and such applications are more suitable.

## Claims

1. A cellulose nanofiber satisfying the following conditions (A) to (B):
(A) the cellulose nanofiber has a carboxyl group and a carboxyl group amount relative to a bone dry mass of the cellulose nanofiber is 0.8 to 1.10 mmol/g; and
(B) an aspect ratio thereof is 20 or more and less than 50.

2. The cellulose nanofiber according to claim 1, further satisfying the following condition (C),
(C) an average fiber diameter is 500 nm or less.

3. An aqueous dispersion composition comprising the cellulose nanofiber according to claim 1 or 2.

4. The composition according to claim 3, for use in a film.
